(19) Europäisches Patentamt
European Patent Office
Office européen des brevets

(11) **EP 4 664 149 A1**

(12) **EUROPEAN PATENT APPLICATION**
published in accordance with Art. 153(4) EPC

(43) Date of publication:
**17.12.2025 Bulletin 2025/51**

(21) Application number: **23921284.8**

(22) Date of filing: **02.11.2023**

(51) International Patent Classification (IPC):
**G01S 7/481** (2006.01)    **G01S 7/497** (2006.01)
**G01S 17/894** (2020.01)

(52) Cooperative Patent Classification (CPC):
**G01S 7/481; G01S 7/497; G01S 17/894**

(86) International application number:
**PCT/JP2023/039625**

(87) International publication number:
**WO 2024/166462 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.02.2023 JP 2023017974**

(71) Applicant: **Canon Kabushiki Kaisha**
**Tokyo, 146-8501 (JP)**

(72) Inventors:
• **HANASAKA Takashi**
**Tokyo 146-8501 (JP)**
• **FUKUDA Koichi**
**Tokyo 146-8501 (JP)**
• **OKAMOTO Kohei**
**Tokyo 146-8501 (JP)**
• **WAKASHIMA Shunichi**
**Tokyo 146-8501 (JP)**

(74) Representative: **TBK**
**Bavariaring 4-6**
**80336 München (DE)**

(54) **DISTANCE MEASURING DEVICE, AND ELECTRONIC INSTRUMENT**

(57)    [PROBLEMS] To provide a distance measuring apparatus capable of reducing the degradation of distance measuring accuracy according to an object distance.

[SOLUTION MEANS] A distance measuring apparatus 1 includes a light source unit 113 including a light emitting element array 210 in which a plurality of light emitting elements are arranged, and a microlens array 230 in which a plurality of microlenses are arranged, a light receiving unit 120 including a light receiving element array 310 in which a plurality of light receiving elements are arranged, and an optical system 160 including an image-side telecentric lens 130, and configured to project light from the light source unit onto an object via the image-side telecentric lens, and to cause the light receiving unit to receive reflected light from the object via the image-side telecentric lens. The microlens array and the image-side telecentric lens form an afocal system. An offset amount is set such that a distance between the light receiving element array and an image-side principal point of the image-side telecentric lens is longer than a focal length of the image-side telecentric lens.

FIG. 1

EP 4 664 149 A1

**Description**

FIELD OF ART

The present invention relates to a distance measuring apparatus.

BACKGROUND ART

A time-of-flight (TOF) distance measuring method is known, which measures a distance to an object (object distance) by measuring a time difference between irradiating light and detecting reflected light.

Patent Document 1 discloses a configuration that includes an aperture stop based on variations in an imaging position of a light receiving optical system in order to suppress S/N reduction caused by external light and increase the robustness of the light receiving system. Patent Document 2 discloses a configuration that slightly shifts an image sensor surface from a lens imaging position to reduce the image height dependency of a light condensed position caused by distortions and the like.

PRIOR ART DOCUMENT

PATENT DOCUMENT

Patent Document 1: Japanese Patent Application Laid-Open No. 2019-53040
Patent Document 2: Japanese Patent Application Laid-Open No. 2015-161854

SUMMARY OF THE INVENTION

PROBLEMS TO BE SOLVED BY THE INVENTION

However, the configurations disclosed in Patent Documents Nos. 1 and 2 are silent about changing in the imaging position according to an object distance. Therefore, depending on the object distance, an image condensed by the light receiving optical system may be blurred, reflected light from the object may be received across a plurality of light receiving elements, and thereby the distance measuring accuracy may deteriorate.

It is a purpose of the present invention to provide a distance measuring apparatus capable of reducing the degradation of distance measuring accuracy according to an object distance.

MEANS TO SOLVE THE PROBLEM

A distance measuring apparatus according to one aspect of the present invention includes a light source unit including a light emitting element array in which a plurality of light emitting elements are arranged, and a microlens array in which a plurality of microlenses are arranged, a light receiving unit including a light receiving element array in which a plurality of light receiving elements are arranged, and an optical system including an image-side telecentric lens, and configured to project light from the light source unit onto an object via the image-side telecentric lens, and to cause the light receiving unit to receive reflected light from the object via the image-side telecentric lens. The microlens array and the image-side telecentric lens form an afocal system. An offset amount is set such that a distance between the light receiving element array and an image-side principal point of the image-side telecentric lens is longer than a focal length of the image-side telecentric lens.

Other purposes and features of the present invention will be described in the following embodiments.

EFFECT OF THE INVENTION

The present invention can provide a distance measuring apparatus capable of reducing the degradation of distance measuring accuracy according to an object distance.

BRIEF DESCRIPTION OF THE DRAWINGS

FIG. 1 is a block diagram of a distance measuring apparatus.

FIG. 2 is a schematic diagram of a light source unit.

FIG. 3 is a schematic diagram of a light receiving element array.

FIG. 4 illustrates the behavior of projected light.

FIG. 5 illustrates the behavior of projected light projected onto an object.

FIG. 6 illustrates the shift of a light condensed position according to an object distance in a twin-lens lens configuration.

FIG. 7 illustrates the behavior of a light receiving element array receiving reflected light according to an object distance.

FIG. 8 illustrates the behavior in a case where an assembly position of the light emitting element array varies.

FIG. 9 illustrates the behavior in a case where the assembly position of the light receiving element array varies.

FIG. 10 illustrates the condensed image size in a case where the assembly position of the light emitting element array and the light receiving element array vary.

EMBODIMENTS FOR PRACTICING THE INVENTION

Referring now to the accompanying drawings, a detailed description will be given of embodiments according to the present inveniton. Corresponding elements in respective figures will be designated by the same reference numerals, and a duplicate description thereof will be omitted.

(FIRST EMBODIMENT)

The specific configuration of a distance measuring apparatus according to a first embodiment will be now described with reference to the drawings.

[OVERALL CONFIGURATION OF DISTANCE MEASURING APPARATUS]

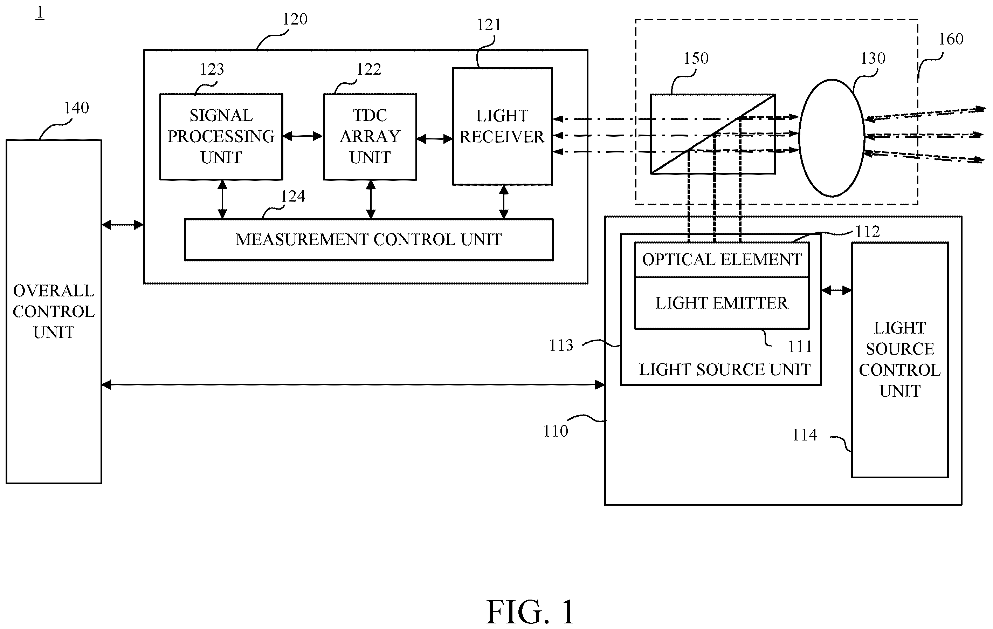

FIG. 1 is a schematic diagram illustrating the configuration of a distance measuring apparatus 1 according to this embodiment. The distance measuring apparatus 1 includes a light projecting unit 110, a measuring unit (light receiving unit) 120, an image-side telecentric lens 130, an overall control unit 140, and a beam splitter 150.

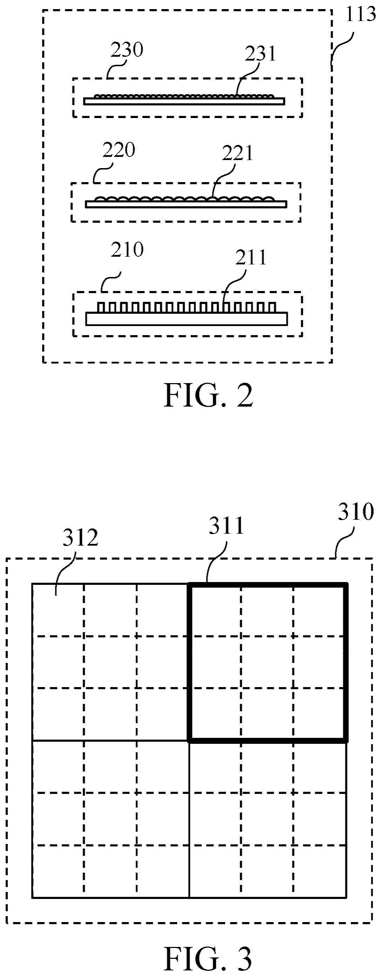

The light projecting unit 110 includes a light source unit 113 including a light emitter 111 and an optical element 112, and a light source control unit 114. The light emitter 111 includes a light emitting element array 210 in which a plurality of light emitting elements 211 illustrated in FIG. 2 are arranged two-dimensionally.

The measuring unit 120 includes a light receiver 121, a Time-to-Digital Converter (TDC) array unit 122, a signal processing unit 123, and a measurement control unit 124. The overall control unit 140 performs overall operation control for the distance measuring apparatus 1. The overall control unit 140 includes, for example, a CPU, a ROM, and a RAM, and controls each part of the distance measuring apparatus 1 by loading a program stored in the ROM into the RAM and executing it with the CPU. At least a part of the overall control unit 140 may be realized by a dedicated hardware circuit.

Each of the plurality of light emitting elements 211 in the light source unit 113 emits pulsed light, and is projected into space through the image-side telecentric lens 130. The pulsed light emitted from the plurality of light emitting elements 211 is projected to different angles of view in space. The projected light is irradiated onto an object, and at least part of the light reflected by the object is received by the light receiver 121 through the image-side telecentric lens 130. The optical system 160, which includes the image-side telecentric lens 130 and the beam splitter 150, projects the light from the light source unit 113 onto the object through the image-side telecentric lens 130. The optical system 160 also receives reflected light from the object through the image-side telecentric lens 130 and makes the measuring unit 120 receive it. The beam splitter 150 is disposed between the image-side telecentric lens 130 and the light source unit 113, and between the image-side telecentric lens 130 and the measuring unit 120.

The time from when light is emitted by the light emitting element 211 to when it is received by the light receiver 121 is the time of flight TOF, and this time is measured by the TDC array unit 122. However, in a single measurement, noise components due to noise light such as ambient light and dark counts cannot be eliminated, and distance measurement errors increases due to the noise influence of the measurement circuit, etc. Thus, the TDC array unit 122 repeats time measurements from when light is emitted to when it is received, and the signal processing unit 123 creates a histogram of measurement results, removes the noise component, and averages the measurement results. The time of flight TOF thus obtained can be substituted into the following equation (1) to obtain the distance L to the object with high accuracy where c is the light speed:

$$L = TOF \times c/2 \qquad (1)$$

[LIGHT SOURCE UNIT]

FIG. 2 is a schematic diagram of the light source unit 113 constituting the light projecting unit 110 according to this embodiment. The light source unit 113 includes a light emitting element array 210, a collimator lens array 220, and a microlens array 230.

The light emitting element array 210 is a two-dimensional array of Vertical Cavity Surface Emitting Lasers (VCSELs) as a plurality of light emitting elements 211 on a substrate. The light emitting elements 211 are not limited to VCSELs, but the plurality of light emitting elements 211 is preferably arrangeable in a one-dimensional or two-dimensional array. For example, the light emitting elements 211 can be edge-emitting lasers or LEDs (light emitting diodes). In a case where an edge emitting laser is used as the light emitting element 211, a laser bar in which a plurality of edge-emitting lasers are arranged one-dimensionally on a substrate, or a laser bar stack in which these are stacked to form a two-dimensional light emitting element array, can be used as the light emitting element array 210. In a case where an LED is used as the light emitting element 211, a plurality of LEDs arranged in a two-dimensional array on a substrate can be used as the light emitting element array 210.

In the distance measuring apparatus 1 according to this embodiment, in order to suppress the influence of ambient light, the wavelength of the light emitted from the light emitting element 211 is preferably in the near-infrared band. However, the use wavelength is not limited to this example. The VCSEL is produced by a semiconductor process using materials for the conventional edge-emitting laser and surface-emitting laser. The main material in causing the VCSEL to emit light of a wavelength in the near-infrared band is a GaAs-based semiconductor material. In this case, a dielectric multilayer film forming a distributed Bragg reflector (DBR) mirror constituting the VCSEL can include two thin films made of materials with different refractive indices alternately and periodically stacked (GaAs/AlGaAs). The wavelength of light to be emitted can be changed by adjusting the combination and composition of the elements of the compound semiconductor.

The VCSEL constituting the VCSEL array (light emitting element array 210) includes electrodes for injecting current and holes into the active layer, and controlling the injection timing can emit arbitrary pulsed light or modulated light. Thus, the light source control unit 114 is provided. The light source control unit 114 can cause at least part of the light emitting elements 211 to emit light at an arbitrary period. For example, the light source control unit 114 can drive each of the light emitting elements 211 independently, or drive each row or column of the VCSEL array or for each specific area.

The light emitted from the VCSEL as the light emitting element 211 is usually divergent light due to the diffraction phenomenon at the opening of the VCSEL. Thus, in order to control the divergent angle of this divergent light or to turn it into parallel light, a collimator lens array 220 is configured in which a plurality of collimator lenses 221 are arranged in a two-dimensional array. In this embodiment, the plurality of collimator lenses 221 constituting the collimator lens array 220 are arranged in one-to-one correspondence with the light emitting elements 211. The light emitted from the VCSEL array collimated by the collimator lens array 220 is converted into parallel light in a direction perpendicular to the VCSEL array substrate, for example. The collimator lens 221 may be omitted in a case where the radiation angle from the VCSEL is small due to the aperture diameter or the like.

Behind the collimator lens array 220, a microlens array 230 is configured in which a plurality of microlenses 231 are arranged in a two-dimensional array. In other words, the collimator lens array 220 is disposed between the light emitting element array 210 and the microlens array 230.

[LIGHT RECEIVING ELEMENT]

FIG. 3 is a schematic diagram of the light receiving element array 310 constituting the light receiver 121 according to this embodiment. The light receiving element array 310 is configured by arranging a plurality of light receiving elements 311 in a two-dimensional array. Each of the light receiving elements 311 includes a plurality of sub light receiving elements 312. Each of the sub-light receiving elements can be driven independently.

In FIG. 3, the light receiving element 311 includes 3×3 sub-light receiving elements, but it may include m×n (where m and n are natural numbers) sub-light receiving elements.

[LIGHT PROJECTION AND RECEPTION]

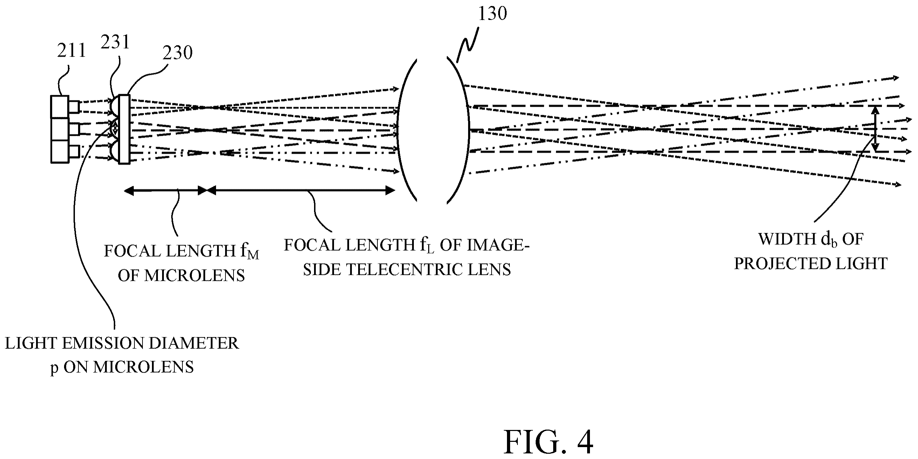

FIG. 4 illustrates the state of projected light after light emitted from the plurality of light emitting elements 211 passes through the image-side telecentric lens 130.

The microlens 231 (microlens array 230) and the image-side telecentric lens 130 form an afocal system. Therefore, light from the image-side telecentric lens 130 is projected at an angle according to the image height (a positional relationship between the microlens 231 and the image-side telecentric lens 130) and is projected parallel. Therefore, the width $d_b$ (thickness in three dimensions) of the projected light is projected with the same width (thickness in three dimensions) at any distance on the object side when viewed from the image-side telecentric lens 130 (without depending on the distance to the object). Where p is a light emission diameter of the light emitted from the light emitting element 211 on the microlens 231 (microlens array 230), $f_M$ is a focal length of the microlens 231, and $f_L$ is a focal length of the image-side telecentric lens 130, the width $d_b$ of the projected light can be expressed by the following equation (2). However, in a case where the width $d_b$ of the projected light is larger than the pupil diameter of the image-side telecentric lens 130, the width $d_b$ of the projected light is limited by the pupil diameter. In a case where the light emission diameter p is larger than the arrangement period (pitch) of the microlenses 231, the light emission diameter p is limited by the arrangement period (pitch) of the microlenses 231.

$$d_b = pf_L/f_M \qquad\qquad (2)$$

This configuration omits the collimator lens 221, but in a case where the spread of the emitted light from the light emitting element 211 increases, the collimator lens 221 may be inserted between the light emitting element 211 and the microlens 231 to collimate it.

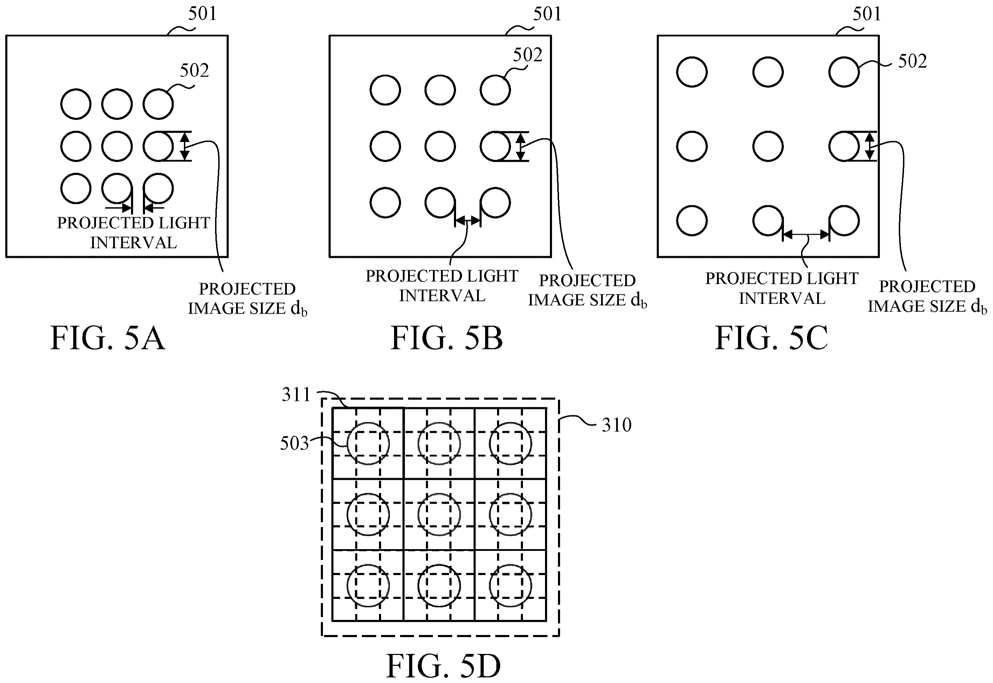

Referring now to FIG. 5(a) to (c), a description will be given of the state of the projected light described in FIG. 4 when viewed on an object. FIG. 5(a) to (c) illustrates the state of the projected light projected onto an object 501. In FIG. 5(a) to (c), the projected light is projected onto the object 501 as a projected image 502. The projected image size $d_b$ in FIG. 5(a) to (c) and the width $d_b$ of the projected light in FIG. 4 are equal to each other. FIG. 5(a), (b), and (c) illustrates the object 501 in order of proximity to the image-side telecentric lens 130.

As illustrated in FIG. 5(a) to (c), a distance between projected light beams increases as a distance from the image-side telecentric lens 130 increases, but the projected image size $d_b$ does not change. In other words, the distance between projected light beams (projected light interval) that pass through the image-side telecentric lens 130 and are irradiated onto the object 501 changes according to the distance to the object 501. On the other hand, the width of each of the plurality of projected light beams (projected image size $d_b$) does not change according to the distance to the object 501. Thereby, the emitted light from a predetermined light emitting element 211 can be received only by a predetermined light receiving element 311 in the light receiving element array 310, as illustrated in FIG. 5(d), and a one-to-one correspondence can be created between the plurality of light emitting elements 211 and the plurality of light receiving elements 311. Therefore, sequential driving can be achieved that drives only part of the plurality of light emitting elements 211 are driven, and only the light receiving elements 311 that correspond to the part of the light emitting elements 211 that have been caused to emit light, among the plurality of light receiving elements 311. Thereby, the plurality of light receiving elements 311 can share a single TDC, the pixel size can be reduced, and thus this configuration is effective for higher resolution.

[CONDENSED IMAGE SHIFT AND CONDENSED IMAGE SIZE INCREASE ACCORDING TO OBJECT DISTANCE IN TWIN-LENS CONFIGURATION]

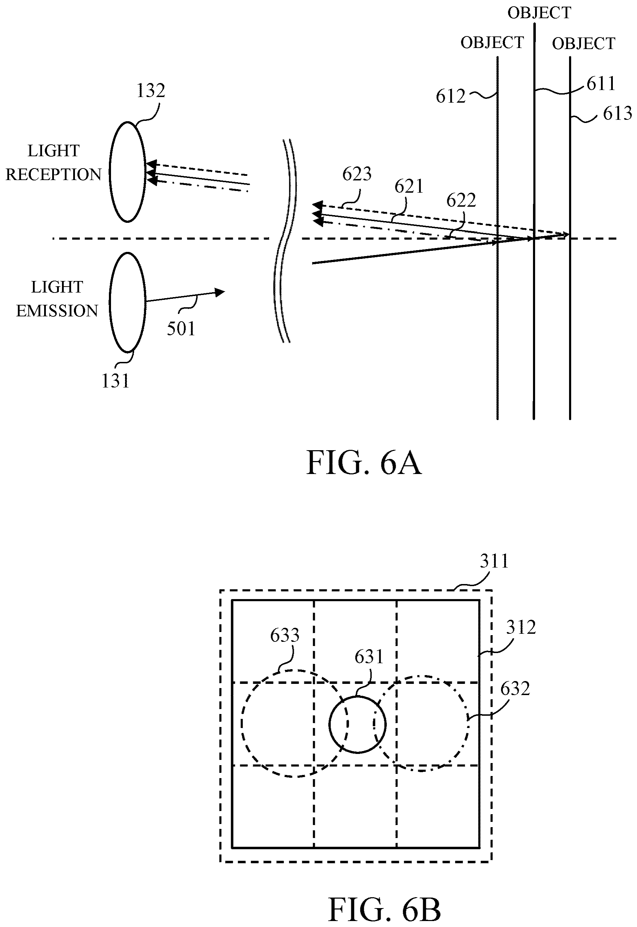

FIG. 6 illustrates how a condensed image shifts according to an object distance in a twin-lens configuration using different image-side telecentric lenses for light emission and light reception.

FIG. 6(a) illustrates how light projected from the image-side telecentric lens 131 is reflected by objects 611, 612, and 613 that are at different distances from the image-side telecentric lens 131, and is received via the image-side telecentric lens 132. At this time, the object 611 is an object at an object distance that provides the best imaging performance (an in-focus object). The objects 612 and 613 are objects (out-of-focus objects) that are closer and farther from the image-side telecentric lenses 131 and 132, respectively, relative to the object 611. Light beams reflected at the objects 611, 612, and 613 are reflected light beams 621, 622, and 623, respectively.

At this time, an incident angle to the image-side telecentric lens 132 on the light receiving side differs according to the object distance (condensed image shift herein), so the light condensed positions of the reflected light beams 621, 622, and 623 after they pass through the image-side telecentric lens 132 also differ. FIG. 6(b) illustrates this state on the light receiving element 311. The reflected light beam 621 condensed on the light receiving element 311 is condensed image 631. The reflected light 622 condensed on the light receiving element 311 is condensed image 632. The reflected light 623 condensed on the light receiving element 311 is condensed image 633. The condensed images 632 and 633 are shifted in a certain direction relative to the condensed image 631. Since the objects 612 and 613 are out of focus, they are blurred, and each of the condensed images 632 and 633 is larger than that of the condensed image 631 (referred to as condensed image size increase herein).

Therefore, the condensed image may spread across adjacent light receiving elements due to the condensed image shift and condensed image size increase. In this case, the one-to-one correspondence between the light emitting element 211 and the light receiving element 311 described above may be lost, and distance measuring accuracy may decrease.

However, the condensed image shift does not occur in the configuration according to this embodiment using the beam splitter 150 as illustrated in FIG. 1 (i.e., the configuration at least a part of the optical system 160 is shared by the light source unit 113 and the measuring unit 120). Hence, in order to enable one-to-one correspondence between the light emitting element 211 and the light receiving element 311 and to reduce the decrease in distance measuring accuracy, the reduction of the condensed image size increase may be demanded.

[POSITIONAL RELATIONSHIP BETWEEN IMAGE-SIDE TELECENTRIC LENS AND LIGHT RECEIVING ELEMENT TO REDUCE CONDENSED IMAGE SIZE INCREASE]

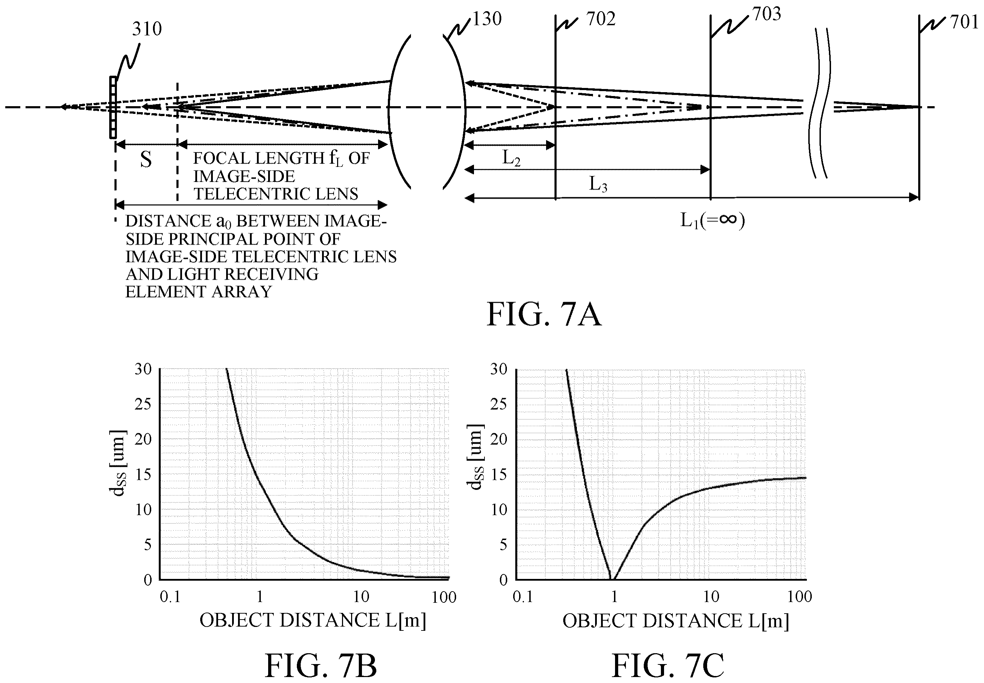

FIG. 7 explains that the condensed image size increase can be reduced by placing the light receiving element array 310 at a position farther away than the focal length $f_L$ of the image-side telecentric lens 130.

FIG. 7(a) illustrates how reflected light beams from object 701 at infinity, the shortestdistance distance-measurable object 702, and the longest-distance distance-measurable object 703 are condensed on the light receiving element array 310 via the image-side telecentric lens 130. These object distances are L1 (=∞), L2 (≠∞), and L3 (≠∞). $a_0$ is a distance between the image-side principal point of the image-side telecentric lens 130 and the light receiving element array 310, and S is a shift amount relative to $a_0$ (where a direction of the light receiving element array 310 when viewed from the image-side telecentric lens 130 is positive). FIG. 7(a) omits the beam splitter 150.

As the object distance is reduced, the influence of the decrease in distance measuring accuracy due to the condensed image size increase described above becomes significant. At this time, object distance $L_2$ is the shortest object distance within a range where the distance measuring accuracy satisfies a certain threshold value.

On the other hand, as the object distance increases, the influence of the decrease in distance measuring accuracy due to the decrease in the reflected light from the object that can be captured by the image-side telecentric lens 130 becomes significant. At this time, the object distance $L_3$ is the longest object distance within the range where the distance measuring accuracy satisfies a certain threshold value.

At this time, the condensed image size $d_{ss}$ on the light receiving element 311 can be expressed by the following equation (3) where $D_p$ is a pupil diameter of the image-side telecentric lens 130:

$$d_{ss} = D_p \times |(a_0 - a)/a| \qquad (3)$$

$D_p = f_L/F$ (where F is an F-number of the image-side telecentric lens 130), $a = (1/f_L - 1/L)^{-1}$ (where L is an object distance), and $a_0 = f_L + S$. FIG. 7(b) and (c) illustrate equation (3). Here, the focal length $f_L$ of the image-side telecentric lens 130 is 9 mm, and the F-number is 5.6.

FIG. 7(b) illustrates a relationship between the condensed image size $d_{ss}$ and the object distance L for $a_0 = f_L$ (S = 0 μm). FIG. 7(c) illustrates a relationship between the condensed image size $d_{ss}$ and the object distance L for $a_0 = f_L + 80$ μm (S = 80 μm). In FIG. 7(b), an object at infinity is in focus, so as the object distance L increases, the condensed image size $d_{ss}$ decreases, and at infinity the condensed image size $d_{ss}$ gradually approaches zero. As the object distance L decreases, the condensed image size $d_{ss}$ increases. On the other hand, in FIG. 7(c), the condensed image size $d_{ss}$ becomes minimum at the object distance $L = L_0 = (1/f_L - 1/a_0)^{-1}$, and the condensed image size $d_{ss}$ increases as a position separates from $L_0$.

Therefore, in order to enable an object distance to be measured for an object that is not at infinity and is located between object distances $L_2$ and $L_3$, the distance $a_0$ between the image-side principal point of the image-side telecentric lens 130 and the light receiving element array 310 may be preferably $a_0 = f_L + S$ (S > 0).

As described above, this embodiment sets an offset amount such that the distance $a_0$ between the image-side principal point of the image-side telecentric lens 130 and the light receiving element array 310 is longer than the focal length $f_L$ of the image-side telecentric lens 130. The offset amount is configured so as to satisfy $a_0 = f_L + S$ (S > 0). Thereby, the influence of the condensed image size increase due to the object distance can be reduced.

(SECOND EMBODIMENT)

[CONDENSED IMAGE SIZE INCREASE DUE TO MANUFACTURING VARIATIONS]

The first embodiment reduces the condensed image size increase by setting the distance $a_0$ between the image-side principal point of the image-side telecentric lens 130 and the light receiving element array 310 to $a_0 = f_L + S$ (S > 0). However, in reality, in a case where the light emitting element array 210 and the light receiving element array 310 are assembled, they may deviate from the intended assembly position due to manufacturing variations. Now consider manufacturing variations in the light emitting element array 210 and the light receiving element array 310 in the optical axis direction.

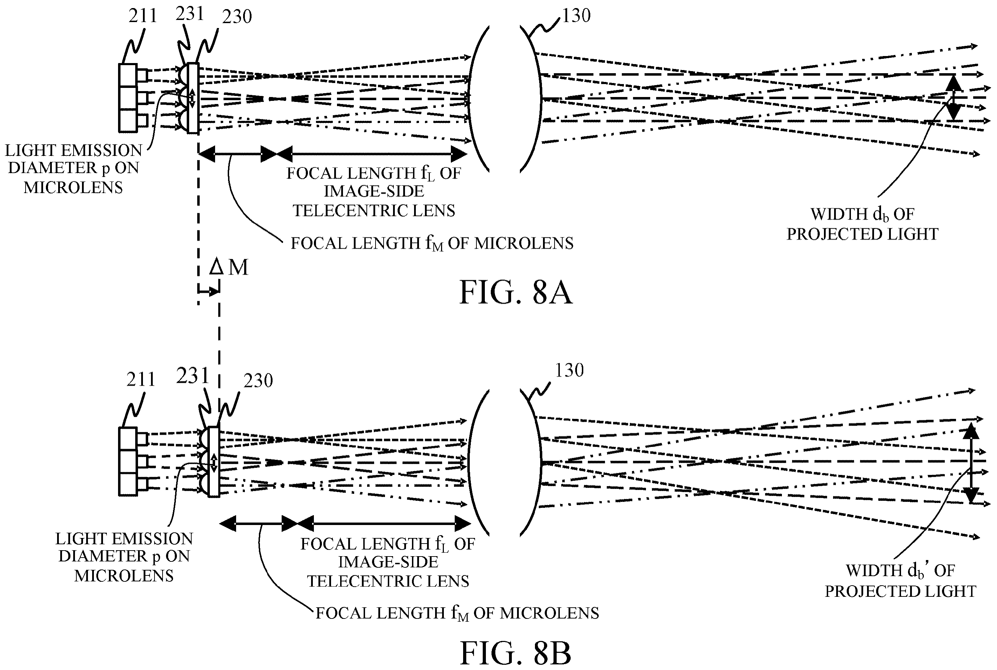

First, in a case where the light emitting element array 210 is shifted from the intended assembly position, the afocal system including the microlens 231 (microlens array 230) and the image-side telecentric lens 130, which was described with reference to FIG. 4, is not ideal. In order to make it an ideal afocal system, the focal position of the microlens array 230 may accord with the focal position of the image-side telecentric lens 130, but these two focal positions may not match due to manufacturing variations. FIG. 8 illustrates this state. FIG. 8(a) illustrates the state of the ideal afocal system, and FIG. 8(b) illustrates a state where the afocal system is shifted from the ideal afocal system due to manufacturing variations. Here, the microlens array 230 is shifted by $\delta M$ from the ideal position (a direction of the image-side telecentric lens 130 when viewed from the microlens array 230 is positive). At this time, the projected light emitted from the image-side telecentric lens 130 is projected in a spread manner according to the object distance L. Here, the width $d_b$' of the projected light in FIG. 8(b) can be expressed by the following equation (3)'.

$$d_b'=d_b\times|(L_e-L)/L_e| \qquad (3)'$$

As described above, in a case where $d_b$ is larger than the pupil diameter $D_p$ of the image-side telecentric lens 130, $d_b=D_p$. $L_e=(1/f_L-1 (f_L-\delta M))^{-1}$. As can be understood from equation (3)', in a case where $\delta M$ is negative, the light is condensed once at $L=L_e$ ($d_b'=0$). On the other hand, in a case where $\delta M$ is positive, $d_b$' always expands according to the object distance, so the width $d_b$' of the projected image is always larger in a case where $\delta M$ is positive (the condensed image size on the light receiving element 311 also increases). Therefore, unless otherwise specified, $\delta M>0$, hereinafter.

Here, the condensed image size $d_{sb}$ in a case where the projected light is reflected by the object in FIG. 8(a) and condensed again via the image-side telecentric lens 130 can be expressed by the following equation (4). Similarly, the condensed image size $d_sb$' in the case of FIG. 8(b) can be expressed by the following equation (5):

$$d_{sb}=d_b\times f_L/(L-f_L) \qquad (4)$$

$$d_{sb}'=d_b'\times f_L/(L-f_L)=d_b\times|(L_e-L)/L_e|\times f_L/(L-f_L)$$
$$=d_b\times((-L_e+L)/L_e)\times f_L/(L-f_L) \qquad (5)$$

Since $L>>f_L$, equations (4) and (5) can be approximated by the following equations (4)' and (5)', respectively:

$$d_{sb}=d_b\times f_L/L \qquad (4)'$$

$$d_{sb}'=d_b\times((-L_e+L)/L_e)\times f_L/L \qquad (5)'$$

From equations (4)' and (5)', in a case where the afocal system shifts from the ideal afocal system as in FIG. 8(b), the condensed image size becomes larger by a factor of $(-L_e+L)/L_e$.

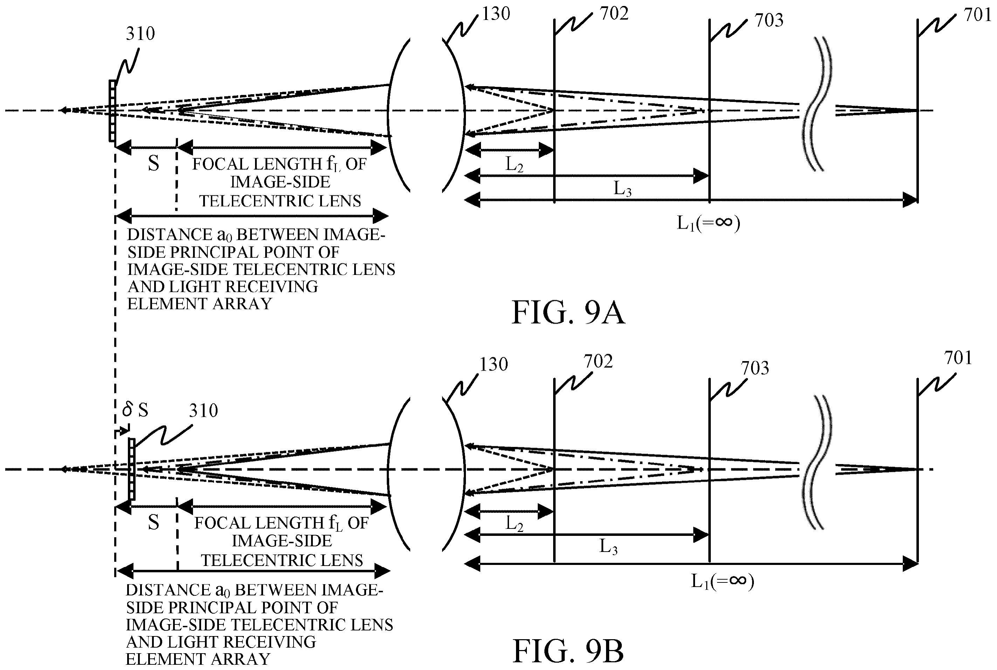

Next, FIG. 9 illustrates the state in a case where the light receiving element array 310 shifts from the intended assembly position. FIG. 9(a) is similar to FIG. 7A, and illustrates a configuration in which the distance $a_0$ between the image-side principal point of the image-side telecentric lens 130 and the light receiving element array 310 is set to $a_0=f_L+S$, thereby reducing the decrease in distance measuring accuracy due to the condensed image size increase. FIG. 9(b) illustrates a case where the position of the light receiving element array 310 is shifted by $\delta S$ in the optical axis direction from the state illustrated in FIG. 9(a) due to manufacturing variations. $\delta S$ is positive in the direction of the image-side telecentric lens 130 when viewed from the light receiving element array 310. The condensed image size $d_{ss}$ on the light receiving element array 310 in FIG. 9(a) can be expressed by equation (3). The condensed image size $d_{ss}$' on the light receiving element array 310 in FIG. 9(b) can be expressed by the following equation (6) in a case where the pupil diameter of the image-side telecentric lens 130 is $D_p$:

$$d_{ss}'=D_p\times|(a_0-\delta S-a)/a| \qquad (6)$$

where $a=(1/f_L-1/L)^{-1}$ and $a_0=(1/f_L-1/L_0)^{-1}$. Here, since $L>>f_L$ and $L_0>>f_L$, equation (6) can be approximated by the following equation (6)':

$$d_{ss}{'}=D_p\times|f_L(L-L_0)/LL_0-\delta S/f_L| \qquad (6)'$$

The final condensed image size $d_s$ on the light receiving element array 310 is determined by the width of the projected light and the position of the light receiving element array 310 (the blur degree of the condensed image), so it can be expressed by the following equation (7):

$$d_s=d_{sb}{'}+d_{ss}{'}$$
$$=\{d_b\times((-L_e+L)/L_e)\times f_L/L\}+\{D_p\times|f_L(L-L_0)/LL_0-\delta S/f_L|\} \qquad (7)$$

At this time, assume that there is no bias in the variation direction of the manufacturing variation in the optical axis direction of the light receiving element array 310 (positive or negative of $\delta S$). $d_s$ is preferably equal between $L=L_{min}$ and $L=L_{max}$ for $\delta S=\pm\alpha$ ($\alpha>0$) where $L_{min}$ is the shortest measurable object distance and $L_{max}$ is the longest measurable object distance. For $\delta S=\alpha$, the condensed image size $d_s$ is largest at $L=L_{min}$, and for $\delta S=-\alpha$, the condensed image size $d_s$ is largest at $L=L_{max}$, so the following equation (8) is preferably satisfied:

$$\{d_b\times((-L_e+L_{min})/L_e)\times f_L/L_{min}\}+\{D_p\times|f_L(L_{min}-L_0)/L_{min}L_0-\alpha/f_L|\}$$
$$= \{d_b\times((-L_e+L_{max})/L_e)\times f_L/L_{max}\}+\{D_p\times|f_L(L_{max}-L_0)/L_{max}L_0+\alpha/f_L|\} \qquad (8)$$

By modifying equation (8), $L_0$ can be expressed by the following equation (9):

$$L_0 = (2L_{min}L_{max})/\{(1-pF/f_M)L_{min}+(1+pF/f_M)L_{max}\} \qquad (9)$$

Therefore, the distance $a_0$ between the image-side principal point of the image-side telecentric lens 130 and the light receiving element array 310 can be expressed by the following equation (10):

$$a_0 = (1/f_L-1/L_0)^{-1} \qquad (10)$$

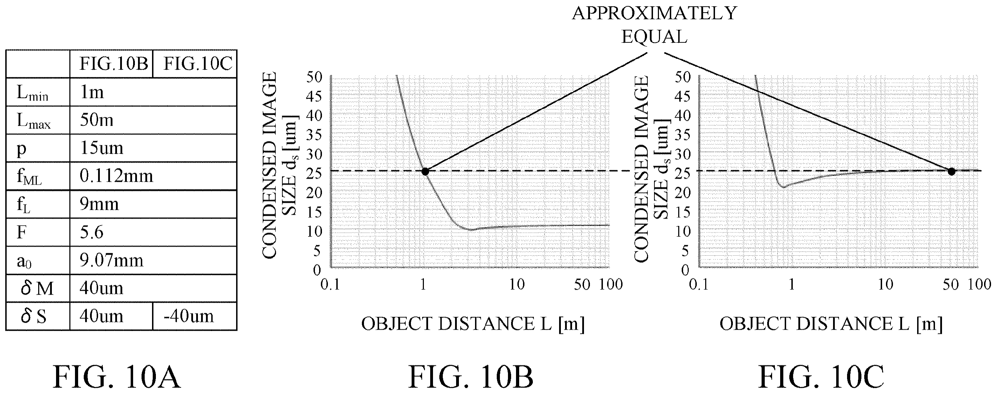

FIG. 10 illustrates the condensed image size $d_s$ at this time. FIG. 10(a) illustrates the calculation condition in expression (10). FIG. 10(b) illustrates a relationship between the condensed image size $d_s$ and the object distance L for $\delta S$ = 40um, and FIG. 10(c) illustrates a relationship between the condensed image size $d_s$ and the object distance L for $\delta S$ = -40um. However, in both FIG. 10(b) and 10(c), $L_{min}$ = 1m and $L_{max}$ = 50m. From FIG. 10(b) and 10(c), it may be understood that the condensed image size $d_s$ is approximately equal between L = 1m in FIG. 10(b) and L = 50m in FIG. 10(c).

As described above, this embodiment can suppress a difference variation in the manufacturing variation direction, and tolerate variations of the same amount by setting $a_0$ = $(1/f_L-1/L_0)^{-1}$ where $L_0$ = $(2LminLmax)/\{(1-pF/fu)Lmin+(1+pF/fu)Lmax\}$. Thus, this embodiment can reduce the condensed image size increase due to the manufacturing variation and suppress the decrease in distance measuring accuracy. In other words, this embodiment can be robust against the manufacturing variations.

(THIRD EMBODIMENT)

In the second embodiment, the distance $a_0$ between the image-side principal point of the image-side telecentric lens 130 and the light receiving element array 310 is expressed by equation (10), but $a_0$ may have a range within a range in which the condensed image size does not exceed a predetermined threshold value. More specifically, $a_0$ may satisfy the following conditional equation (11):

$$(1/f_L-1/L_0)^{-1}-F\delta < a_0 < (1/f_L-1/L_0)^{-1}+F\delta \qquad (11)$$

where F is an F-number of the image-side telecentric lens 130, and $\delta$ is a permissible circle of confusion of the image-side telecentric lens 130.

In a case where the optical characteristics of the microlens 231 and the image-side telecentric lens 130 are ideal, the permissible circle of confusion δ may be regarded as a diffraction limit and expressed by the following expression (12):

$$\delta = 2.44 F \lambda \tag{12}$$

where λ is a wavelength of the light emitted from the plurality of light emitting elements 211.

While the preferred embodiments of the present invention has described example embodiments, the present invention is not limited to these embodiments and various modifications and variations can be made within its gist.

(OTHER EMBODIMENTS)

The above distance measuring apparatus can be implemented in an arbitrary electronic apparatus having a processing means that operates to execute predetermined processing using distance information. Such an electronic apparatus includes an image pickup apparatus, a computer device (such as a personal computer, a tablet computer, a media player, and a PDA), a mobile phone, a smartphone, a game machine, a robot, a drone, a vehicle, etc. These are merely examples, and the distance measuring apparatus according to the present invention can also be implemented in other electronic apparatuses.

The present invention can supply a program that implements one or more functions of the above embodiments to a system or apparatus via a network or a storage medium, and can be implemented by one or more processors in a computer of the system or apparatus configured to read and execute the program. It can also be implemented by a circuit (*e.g.,* an ASIC) that implements one or more functions.

**Claims**

1.　A distance measuring apparatus comprising:

　　　a light source unit including a light emitting element array in which a plurality of light emitting elements are arranged, and a microlens array in which a plurality of microlenses are arranged;
　　　a light receiving unit including a light receiving element array in which a plurality of light receiving elements are arranged; and
　　　an optical system including an image-side telecentric lens, and configured to project light from the light source unit onto an object via the image-side telecentric lens, and to cause the light receiving unit to receive reflected light from the object via the image-side telecentric lens,
　　　wherein the microlens array and the image-side telecentric lens form an afocal system, and
　　　wherein an offset amount is set such that a distance between the light receiving element array and an image-side principal point of the image-side telecentric lens is longer than a focal length of the image-side telecentric lens.

2.　The distance measuring apparatus according to claim 1, wherein the optical system further includes a beam splitter, and
　　wherein the beam splitter is disposed between the image-side telecentric lens and the light source unit, and between the image-side telecentric lens and the light receiving unit.

3.　The distance measuring apparatus according to claim 1 or 2, wherein at least a part of the optical system is shared by the light source unit and the light receiving unit.

4.　The distance measuring apparatus according to claim 1, wherein the number of image-side telecentric lenses is one.

5.　The distance measuring apparatus according to any one of claims 1 to 4,
　　wherein the plurality of light emitting elements correspond one-to-one to the plurality of light receiving elements.

6.　The distance measuring apparatus according to any one of claims 1 to 5,
　　wherein the light source unit further includes a collimator lens array in which a plurality of collimator lenses are arranged, and the collimator lens array is disposed between the light emitting element array and the microlens array.

7.　The distance measuring apparatus according to any one of claims 1 to 6, wherein the plurality of light emitting elements are arranged two-dimensionally,

wherein the plurality of light receiving elements are arranged two-dimensionally, and
wherein the plurality of microlenses are arranged two-dimensionally.

8. The distance measuring apparatus according to any one of claims 1 to 7,
wherein where $a_0$ is a distance between the light receiving element array and the image-side principal point of the image-side telecentric lens, $L_{min}$ is a shortest measurable object distance, $L_{max}$ is a longest measurable object distance, $f_L$ is a focal length of the image-side telecentric lens, F is an F-number of the image-side telecentric lens, p is a light emission diameter on the microlens array of light emitted from each of the plurality of light emitting elements, and $f_M$ is a focal length of each of the plurality of microlenses, the following equations are satisfied:

$$a_0 = (1/f_L - 1/L_0)^{-1}$$

$$L_0 = (2L_{min}L_{max})/\{(1 - pF/f_M)L_{min} + (1 + pF/f_M)L_{max}\},$$

and
wherein the offset amount is $a_0 - f_L$.

9. The distance measuring apparatus according to any one of claims 1 to 8,
wherein in a case where an emission diameter on the microlens array of light emitted from each of the plurality of light emitting elements is larger than an arrangement period of the plurality of microlenses, the emission diameter is equal to the arrangement period of the plurality of microlenses.

10. The distance measuring apparatus according to any one of claims 1 to 9,

wherein the following conditional expression is satisfied:

$$a_0 - F\delta < a_0 < a_0 + F\delta$$

where $a_0$ is a distance between the light receiving element array and the image-side principal point of the image-side telecentric lens, F is an F-number of the image-side telecentric lens, and $\delta$ is a permissible circle of confusion of the image-side telecentric lens.

11. The distance measuring apparatus according to any one of claims 1 to 10,

wherein the following equation is satisfied:

$$\delta = 2.44F\lambda$$

where $\lambda$ is a wavelength of light emitted from each of the plurality of light emitting elements, F is an F-number of the image-side telecentric lens, and $\delta$ is a permissible circle of confusion of the image-side telecentric lens.

12. The distance measuring apparatus according to any one of claims 1 to 11, further comprising:

a light source control unit configured to control the light source unit,
wherein the light source control unit causes at least part of the plurality of light emitting elements to emit light at an arbitrary period.

13. The distance measuring apparatus according to any one of claims 1 to 12,
wherein light emitted from a predetermined light emitting element among the plurality of light emitting elements is received by a predetermined light receiving element among the plurality of light receiving elements.

14. The distance measuring apparatus according to any one of claims 1 to 13,
wherein each of the plurality of light receiving elements includes a plurality of sub light receiving elements.

**15.** An electronic apparatus comprising:

the distance measuring apparatus according to any one of claims 1 to 14; and
a processing means configured to execute predetermined processing using distance information obtained by the distance measuring apparatus.

FIG. 1

FIG. 2

FIG. 3

211 231 230 130

FOCAL LENGTH $f_M$
OF MICROLENS

FOCAL LENGTH $f_L$ OF IMAGE-
SIDE TELECENTRIC LENS

WIDTH $d_b$ OF
PROJECTED LIGHT

LIGHT EMISSION DIAMETER
p ON MICROLENS

FIG. 4

501

502

PROJECTED LIGHT
INTERVAL

PROJECTED
IMAGE SIZE d_b

## FIG. 5A

501

502

PROJECTED LIGHT
INTERVAL

PROJECTED
IMAGE SIZE d_b

## FIG. 5B

501

502

PROJECTED LIGHT
INTERVAL

PROJECTED
IMAGE SIZE d_b

## FIG. 5C

311

503

310

## FIG. 5D

EP 4 664 149 A1

FIG. 6A

FIG. 6B

310

/130    /702    /703    /701

S    FOCAL LENGTH $f_L$ OF
IMAGE-SIDE
TELECENTRIC LENS

$L_2$

$L_3$

DISTANCE $a_0$ BETWEEN IMAGE-
SIDE PRINCIPAL POINT OF
IMAGE-SIDE TELECENTRIC LENS
AND LIGHT RECEIVING
ELEMENT ARRAY

$L_1(=\infty)$

FIG. 7A

FIG. 7B

FIG. 7C

EP 4 664 149 A1

FIG. 8A

FIG. 8B

310

130 702 703 701

S FOCAL LENGTH $f_L$ OF
IMAGE-SIDE
TELECENTRIC LENS

$L_2$

$L_3$

$L_1(=\infty)$

DISTANCE $a_0$ BETWEEN IMAGE-
SIDE PRINCIPAL POINT OF
IMAGE-SIDE TELECENTRIC LENS
AND LIGHT RECEIVING
ELEMENT ARRAY

FIG. 9A

130 702 703 701

$\delta S$ 310

S FOCAL LENGTH $f_L$ OF
IMAGE-SIDE
TELECENTRIC LENS

$L_2$

$L_3$

$L_1(=\infty)$

DISTANCE $a_0$ BETWEEN IMAGE-
SIDE PRINCIPAL POINT OF
IMAGE-SIDE TELECENTRIC LENS
AND LIGHT RECEIVING
ELEMENT ARRAY

FIG. 9B

EP 4 664 149 A1

| | FIG.10B | FIG.10C |
|---|---|---|
| $L_{min}$ | 1m | |
| $L_{max}$ | 50m | |
| p | 15um | |
| $f_{ML}$ | 0.112mm | |
| $f_L$ | 9mm | |
| F | 5.6 | |
| $a_0$ | 9.07mm | |
| $\delta M$ | 40um | |
| $\delta S$ | 40um | -40um |

FIG. 10A

APPROXIMATELY
EQUAL

FIG. 10B

FIG. 10C

## INTERNATIONAL SEARCH REPORT

| International application No. |
|---|
| **PCT/JP2023/039625** |

| **A.** | **CLASSIFICATION OF SUBJECT MATTER** |
|---|---|

*G01S 7/481*(2006.01)i; *G01S 7/497*(2006.01)i; *G01S 17/894*(2020.01)i
FI:   G01S7/481 A; G01S7/497; G01S17/894

According to International Patent Classification (IPC) or to both national classification and IPC

| **B.** | **FIELDS SEARCHED** |
|---|---|

Minimum documentation searched (classification system followed by classification symbols)

G01S7/48-7/51; G01S17/00-17/95; G01C3/06-3/08; G01B11/00-11/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | JP 2022-531578 A (OUSTER, INC.) 07 July 2022 (2022-07-07) | 1-7, 9-15 |
| | paragraphs [0024]-[0111], fig. 1A-14 | |
| A | | 8 |
| Y | WO 2022/164748 A1 (OMRON CORPORATION) 04 August 2022 (2022-08-04) | 1-7, 9-15 |
| | paragraphs [0002], [0048]-[0062], fig. 11-13 | |
| A | | 8 |
| Y | JP 2022-510695 A (LUMINAR, LLC) 27 January 2022 (2022-01-27) | 2-7, 9-15 |
| | paragraph [0006], fig. 1 | |
| A | | 8 |
| A | WO 2021/145190 A1 (SONY SEMICONDUCTOR SOLUTIONS CORP.) 22 July 2021 (2021-07-22) | 1-15 |
| | paragraphs [0012]-[0144], fig. 1-22 | |
| A | WO 2022/190490 A1 (JURARON IND INC.) 15 September 2022 (2022-09-15) | 1-15 |
| | entire text, all drawings | |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2023/039625** |

## C.  DOCUMENTS CONSIDERED TO BE RELEVANT

| Category* | Citation of document, with indication, where appropriate, of the relevant passages | Relevant to claim No. |
| --- | --- | --- |
| A | JP 2022-111802 A (CANON KABUSHIKI KAISHA) 01 August 2022 (2022-08-01)<br>paragraph [0021] | 1-15 |
| A | CN 114942449 A (LORENTECH (NINGBO) TECHNOLOGY CO., LTD.) 26 August 2022 (2022-08-26)<br>entire text, all drawings | 1-15 |

Form PCT/ISA/210 (second sheet) (January 2015)

## INTERNATIONAL SEARCH REPORT
### Information on patent family members

International application No.

**PCT/JP2023/039625**

| Patent document cited in search report | | | Publication date (day/month/year) | Patent family member(s) | | | Publication date (day/month/year) |
|---|---|---|---|---|---|---|---|
| JP | 2022-531578 | A | 07 July 2022 | US | 2022/0035011 | A1 | |
| | | | | paragraphs [0025]-[0116], fig. 1A-14 | | | |
| | | | | WO | 2020/223561 | A1 | |
| | | | | KR | 10-2022-0003588 | A | |
| | | | | CN | 113906317 | A | |
| WO | 2022/164748 | A1 | 04 August 2022 | US | 2022/0236413 | A1 | |
| JP | 2022-510695 | A | 27 January 2022 | US | 2020/0182968 | A1 | |
| | | | | paragraph [0035], fig. 1 | | | |
| | | | | US | 10401480 | B1 | |
| | | | | WO | 2020/117912 | A1 | |
| | | | | CN | 113302512 | A | |
| WO | 2021/145190 | A1 | 22 July 2021 | US | 2023/0054053 | A1 | |
| | | | | paragraphs [0081]-[0209], fig. 1-22 | | | |
| | | | | EP | 4092463 | A1 | |
| | | | | KR | 10-2022-0123001 | A | |
| WO | 2022/190490 | A1 | 15 September 2022 | (Family: none) | | | |
| JP | 2022-111802 | A | 01 August 2022 | US | 2022/0229156 | A1 | |
| | | | | paragraph [0028] | | | |
| CN | 114942449 | A | 26 August 2022 | (Family: none) | | | |

Form PCT/ISA/210 (patent family annex) (January 2015)

**EP 4 664 149 A1**

**Patent documents cited in the description**

- JP 2019053040 A

- JP 2015161854 A